(19) Europäisches Patentamt / European Patent Office / Office européen des brevets

(11) **EP 4 078 227 B1**

(12) **FASCICULE DE BREVET EUROPEEN**

(45) Date de publication et mention de la délivrance du brevet:
**21.02.2024 Bulletin 2024/08**

(21) Numéro de dépôt: **20812061.8**

(22) Date de dépôt: **30.11.2020**

(51) Classification Internationale des Brevets (IPC):
**G01S 13/00** *(2006.01)* **G01S 13/87** *(2006.01)*
**G01S 13/58** *(2006.01)* **G01S 7/02** *(2006.01)*
**G01S 7/00** *(2006.01)*

(52) Classification Coopérative des Brevets (CPC):
**G01S 13/003; G01S 7/003; G01S 7/024;
G01S 13/583; G01S 13/878**

(86) Numéro de dépôt international:
**PCT/EP2020/083921**

(87) Numéro de publication internationale:
**WO 2021/121928 (24.06.2021 Gazette 2021/25)**

(54) **PROCÉDÉ DE MESURE DOPPLER POUR DISPOSITIF RADAR MULTISTATIQUE, DISPOSITIF RADAR METTANT EN OEUVRE UN TEL PROCÉDÉ**

DOPPLER-MESSVERFAHREN FÜR MULTISTATISCHE RADARVORRICHTUNG, RADARVORRICHTUNG ZUR DURCHFÜHRUNG EINES SOLCHEN VERFAHRENS

DOPPLER MEASUREMENT METHOD FOR MULTISTATIC RADAR DEVICE, RADAR DEVICE IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2019 FR 1914853**

(43) Date de publication de la demande:
**26.10.2022 Bulletin 2022/43**

(73) Titulaire: **THALES**
**92190 Meudon (FR)**

(72) Inventeurs:
• **KEMKEMIAN, Stéphane**
**78851 ELANCOURT (FR)**
• **MAZEAU, Thierry**
**33700 MERIGNAC (FR)**
• **HODE, Jean-Michel**
**33700 MERIGNAC (FR)**

(74) Mandataire: **Atout PI Laplace**
**Immeuble "Visium"**
**22, avenue Aristide Briand**
**94117 Arcueil Cedex (FR)**

(56) Documents cités:
**EP-A1- 2 461 166      FR-A1- 2 879 303
US-A- 5 534 868      US-A1- 2016 282 457**

**Description**

Le domaine technique de l'invention est celui de la détection radar, le domaine d'application concerne les systèmes radar multistatiques comportant au moins $M \geq 1$ radars émetteurs et au moins $N \geq 1$ radar récepteurs. L'invention s'applique à des radars fixes au sol, à des radars aéroportés, navals ou spatiaux, plus généralement mobiles, voire à une combinaison des deux types.

On connaît dans ce domaine technique la demande de brevet US 2016/0282457 A1, qui décrit un radar non linéaire émettant un signal formé par la combinaison d'au moins deux signaux. On connaît également la demande de brevet EP 2.461.166 A1 ou le brevet US 5.534.868 A, qui traitent d'un signal radar émis sur deux tons, ou la demande de brevet FR 2.879.303 A1.

Pour la simplification de l'exposé, dans la suite de la description les radars sont supposés fixes, avec N = M = 1 (système bi-statique) mais le principe et aisément généralisable à des radars mobiles et aussi en plus grand nombre.

Un inconvénient du radar mono-statique (cas où l'émetteur et le récepteur sont sur un même site) est son manque de discrétion, donc sa vulnérabilité. En effet le radar qui effectue la détection, la localisation et la mesure de vitesse de la cible est aussi celui qui émet le signal et qui est détectable par un système d'écoute adverse. Les systèmes bi-statiques évitent cette vulnérabilité.

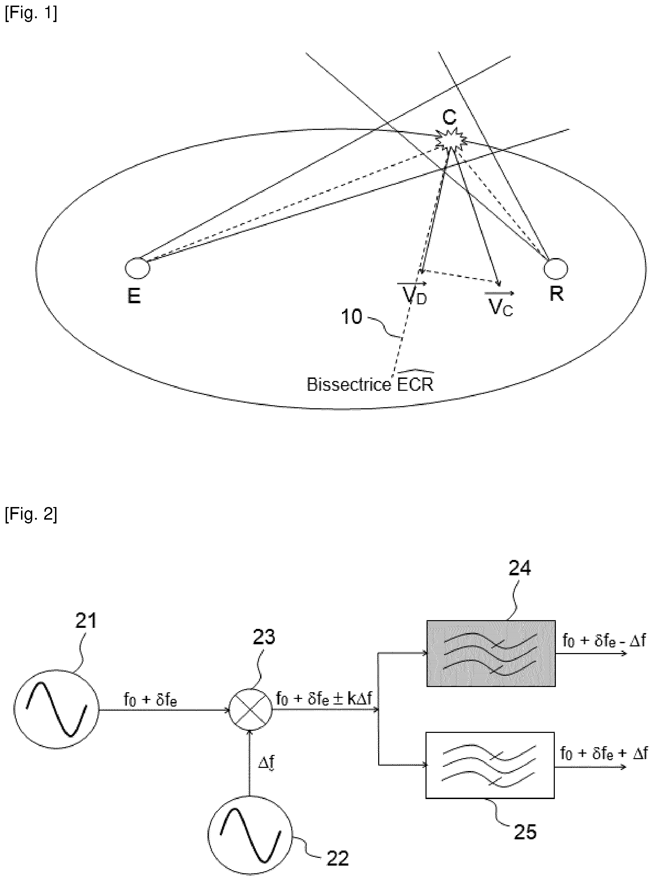

La figure 1 illustre un système bi-statique, à l'intérieur d'une éllipsoïde iso-distance. Classiquement un premier radar E émet un signal vers une cible C, un deuxième radar R recevant et traitant le signal rétrodiffusé par la cible C. La vulnérabilité est évitée en séparant physiquement et très significativement la partie « émission » E visible d'un ESM (« *Electronic Support Measure* ») de la partie réception R qui détecte et mesure la cible placée en C.

La contrepartie de cette séparation physique est que les radars E et R doivent nécessairement disposer chacun de leur propre oscillateur local et donc de leur propre base de temps. Ces oscillateurs présentent inévitablement des dérives différentielles en fréquence. Par exemple si on veut opérer le système radar bi-statique sur la fréquence porteuse $f_0$ :

- Le signal émis ne sera pas exactement à la fréquence $f_0$ mais à la fréquence

$$f_E = f_0 + \delta f_e \; ;$$

- La fréquence centrale de réception (définie par l'oscillateur locale de démodulation en réception) ne sera pas non plus exactement à la fréquence $f_0$ mais à la fréquence $f_R = f_0 + \delta f_r$.

Dans le cas d'un système mono-statique utilisant la même source de fréquence on a $\delta f_e = \delta f_r$, et ces dérivent s'annulent entre elles, ce qui n'est plus le cas d'un système bi-statique.

Si la cible est affectée d'une « vitesse Doppler » produisant un effet Doppler $f_D$, le récepteur mesure en réalité une fréquence Doppler biaisée :

$$f'_D = f_D + f_E - f_R = f_D + \delta f.$$

Par exemple, supposons un radar fonctionnant en bande X à $f_0$ = 10 Ghz et des oscillateurs locaux dont la précision relative est de $10^{-6}$. Cela signifie *que* $f_E$ et $f_R$ sont définies à $10^{10} \times 10^{-6}$ = 10000 Hz près : en bande X, une telle erreur Doppler correspond à une erreur en vitesse Doppler d'environ 150 m/s ( $\frac{\delta f_D}{f_0} = \frac{2V}{c}$ ). On remarque cependant que l'erreur en vitesse ne dépend que de la précision relative de la source et non directement de sa fréquence.

Il est à noter que dans le cas d'un système bi-statique, l'homme du métier sait que cette « vitesse Doppler » $V_D$ est la projection du vecteur vitesse $V_C$ de la cible sur la bissectrice 10 de l'angle $\widehat{ECR}$.

On peut imaginer réduire ce biais en vitesse en utilisant des oscillateurs ayant une bien meilleure stabilité. Par exemple un oscillateur de stabilité relative de $10^{-8}$ permet de ramener l'erreur en vitesse à 1.5 m/s, ce qui peut constituer une erreur acceptable. Cependant dans le cas d'un système radar, en particulier fonctionnant en ondes centimétriques ou millimétriques, et où le critère de cout du matériel est très important, une telle solution s'avère rapidement trop onéreuse, les oscillateurs à très haute fréquence et haute stabilités étant très onéreux.

Plusieurs méthodes sont connues de l'art antérieur pour remédier aux problèmes précédents. Dans une première méthode on réalise l'asservissement des oscillateurs locaux et des bases de temps de chaque radar sur un signal de référence commun, par exemple le signal GPS (plus généralement GNSS). On parle ainsi de « GNSS disciplined référence ». Cette solution est couramment employée dans les systèmes radar multistatiques non-critiques, c'est-à-dire pour lesquels on peut faire l'hypothèse que le signal GNSS (GPS) sera toujours disponible, non brouillé ou non intentionnellement faussé localement. Toutefois, la réalisation d'un oscillateur ayant une pureté spectrale satisfaisante (nécessaire pour obtenir une visibilité sous le fouillis de sol suffisante) tout en étant asservi sur un signal GNSS de très faible rapport S/B est complexe.

Dans une deuxième méthode, on réalise la transmission de la réplique du signal émis directement de l'émetteur vers le récepteur. Cette solution est utilisée dans le cas des systèmes multistatiques non-coopératifs tels que ceux utilisant les signaux de télédiffusion (radars « PCL » = Passive Cohérent Locator). Là encore, le système est vulnérable au brouillage ou à l'attaque de la transmission de la réplique du signal émis. Il faut également que les conditions de visibilité de E vu de R permettent la transmission de la réplique avec un rapport signal à bruit suffisant. De plus, le traitement à mettre en oeuvre est complexe.

Dans une troisième méthode, on réalise l'asservissement des oscillateurs locaux et des bases de temps de chaque radar (horloges atomiques locales ultra-stables). C'est la solution de référence pour les systèmes critiques car elle ne repose pas sur la réception d'un signal tiers et seules quelques données doivent être échangées ou planifiées entre les radars E et R, ce qui permet d'utiliser un lien simple et durci entre les plateformes. C'est en revanche une solution complexe et coûteuse à mettre en oeuvre.

Un but de l'invention est de pallier les inconvénients précités et notamment de permettre la mise en oeuvre d'une solution non complexe et non coûteuse. A cet effet, l'invention a pour objet un procédé de mesure de la vitesse Doppler d'une cible détectée par un dispositif radar multistatique comportant au moins un premier radar générant un signal d'émission vers ladite cible et un deuxième radar recevant le signal rétrodiffusé par ladite cible. Le deuxième radar a connaissance :

- de coordonnées du premier radar,

- d'un vecteur vitesse du premier radar,

- d'une direction illuminée par le premier radar,

- d'une fréquence centrale d'émission utilisée par le premier radar,

- d'une forme d'onde utilisée par le premier radar,

Dans le procédé selon l'invention, on génère à l'émission deux ondes porteuses ayant un écart fréquentiel donné, l'écart fréquentiel étant connu du deuxième radar, la mesure de la vitesse Doppler en réception étant fonction de la différence des fréquences de réception desdites ondes porteuses divisée par ledit écart fréquentiel.

Les deux ondes porteuses sont par exemple générées à l'émission par mélange d'une onde de fréquence voisine de la fréquence d'émission et d'une onde de plus basse fréquence fixe et plus stable en fréquence que ladite fréquence d'émission.

L'antenne d'émission est par exemple délimitée en au moins deux parties, une première partie étant dédiée à l'émission d'une onde porteuse et une deuxième partie étant dédiée à l'émission de l'autre onde porteuse.

Dans un autre mode de mise en oeuvre possible, l'onde porteuse est émise selon une polarisation, l'autre onde porteuse étant émise sur une autre polarisation.

A la réception, la transposition en fréquence des signaux de réception desdites ondes porteuses réfléchies par ladite cible est par exemple réalisée en les mélangeant avec une onde de fréquence voisine de ladite fréquence d'émission fournie par une première horloge. Ladite différence des fréquences de réception desdites porteuses réfléchies par ladite cible est par exemple mesurée à la réception en utilisant une deuxième horloge plus précise que ladite première horloge. Les deux horloges sont par exemple indépendantes.

D'autres caractéristiques et avantages de l'invention apparaîtront à l'aide de la description qui suit, faite en regard de dessins annexés qui représentent :

[Fig.1] la figure 1 déjà décrite, une illustration d'une géométrie bi-statique ;

[Fig.2] la figure 2, un exemple de génération de signal à deux ton utilisé dans le procédé selon l'invention ;

[Fig.3] la figure 3, un exemple d'antenne d'émission partionnée en deux ;

[Fig.4] la figure 4, un exemple d'antenne partionnée selon la polarisation ;

[Fig.5] la figure 5, un synoptique d'un exemple de circuit de réception utilisé pour la mise en oeuvre du procédé selon l'invention.

Pour décrire l'invention, on commence par décrire la partie émission d'un radar bi-statique, située sur un site, puis on décrira la partie réception située sur un site physiquement éloigné, les sites pouvant être des plateformes aéroportées par exemple. Pour la partie émission on décrit la nature des signaux émis puis des spécificités apportées à l'antenne.

La figure 2 illustre la génération d'onde selon l'invention au niveau de l'émission. Le principe de l'invention consiste à utiliser une génération de fréquence porteuse utilisant deux sources 21, 22 :

- Une première source 21 générant directement une onde de fréquence $f_0 + \delta f_e$ proche de la fréquence d'émission du radar mais dont la stabilité relative n'a pas nécessairement besoin d'être précise (notamment pour éviter un surcoût) : par exemple une stabilité de $10^{-6}$ voire une stabilité moindre ($\delta f_e$ étant l'erreur sur la fréquence de la source à $f_0$). Cette source 21 peut avoir une fréquence ajustable pour permettre l'agilité de fréquence d'émission.

- Une seconde source 22 de fréquence fixe $\Delta f$ nettement plus basse (par exemple de l'ordre du GHz) mais dont la stabilité relative est nettement meilleure : par exemple $10^{-8}$.

Comme on le verra par la suite, l'invention utilise avantageusement cette source de fréquence fixe $\Delta f$ pour extraire la vitesse Doppler, cette source de fréquence étant à plus basse fréquence peut être à haute stabilité sans surcoût excessif.

A partir de ces deux sources on génère un signal porteur à deux tons, au moyen d'un mélangeur équilibré 23, dont les entrées sont les sorties des deux sources 21, 22, et de deux filtres passe-bande 24, 25. La sortie du mélangeur donne le signal :

- $$f_0 + \delta f_e \pm k\Delta f$$

Ce signal constitue l'entrée de chacun des deux filtres, la sortie du premier filtre 24 et la sortie du deuxième filtre 25 étant respectivement :

- $$f_0 + \delta f_e + \Delta f$$

- $$f_0 + \delta f_e - \Delta f$$

D'autres modes de réalisation peuvent être utilisés pour générer ce signal porteur à partir des deux sources 21, 22, permettant dans certain cas de s'affranchir des filtres passe-bande 24 et 25, comme par exemple un mélangeur équilibré en régime linéaire qui délivre sur ses deux sorties directement les signaux sinusoïdaux correspondant aux mélanges additif et soustractif des fréquences de deux signaux à $f_0 + \delta f_e$ et $\Delta f$. La nécessité de l'opération de séparation des deux tons dépend de l'aptitude du dispositif d'émission à émettre un signal multitons (amplification linéaire ou saturée).

Le terme « $k$ » est un entier positif supérieur ou égal à 1 qui correspond aux harmoniques du signal de mélange de fréquence $\Delta f$. Les deux filtres passe-bande 24, 25 en sortie permettent de ne retenir que les deux raies porteuses désirées.

A une constante multiplicative près, le signal rayonné à l'émission est ainsi la somme des deux signaux :

$$S_E(t) = \mathrm{Re}\left[e^{2\pi j(f_0 + \delta f_e - \Delta f)t} + e^{2\pi j(f_0 + \delta f_e + \Delta f)t + j\varphi}\right]$$

Où $\varphi$ est une phase arbitraire. Ce qui peut s'écrire sous la forme de :

$$S_E(t) = \mathrm{Re}\left[e^{2\pi j(f_0 + \delta f_e)t + j\varphi/2}\left(e^{-2\pi j\Delta ft - j\varphi/2} + e^{+2\pi j\Delta ft + j\varphi/2}\right)\right]$$

$$= 2\cos(2\pi\Delta ft + \varphi/2)\,\mathrm{Re}\left(e^{2\pi j(f_0 + \delta f_e)t + j\varphi/2}\right)$$

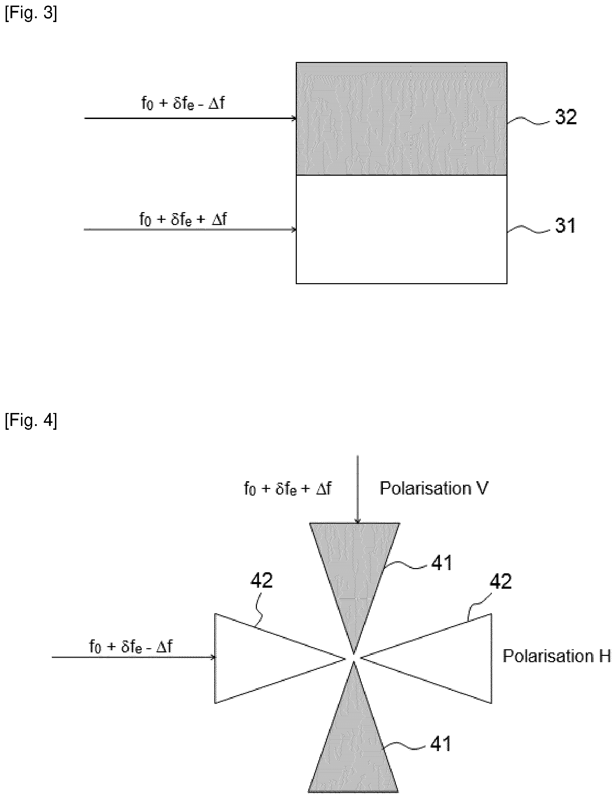

La relation précédente montre que l'enveloppe du signal émis autour de $f_0$ ne possède pas une amplitude constante mais une amplitude variable selon A = 2|cos($2\pi\Delta ft + \varphi/2$)| . Ceci peut compliquer l'émission du signal avec des dispositifs d'émission fonctionnant en régime saturé, inaptes à transmettre l'intégralité de l'amplitude du signal. Pour surmonter cet inconvénient, on ne réalise pas la somme des deux composantes sinusoïdales dans les circuits d'émission, mais dans l'espace de propagation. Les figures 3 et 4 illustrent deux solutions de sommation possibles dans l'espace en partitionnant l'antenne d'émission, plus particulièrement en dédiant des parties d'antenne à chacune de ces deux composantes.

La figure 3 présente une première solution utilisant un partionnement de l'antenne d'émission. Cette dernière est partionnée en deux parties rayonnantes. Une première partie 31 est réservée à l'émission du premier signal $f_0 + \delta f_e + \Delta f$. La deuxième partie 32 est réservée à l'émission du deuxième signal $f_0 + \delta f_e - \Delta f$. La partition est réalisée de telle sorte que le rayonnement du signal soit réalisé dans des conditions satisfaisantes, notamment en ce qui concerne les lobes secondaires et les ouvertures de lobes.

La figure 4 illustre une autre solution où on imbrique deux parties rayonnantes 41, 42 rayonnant dans des polarisations orthogonales. Une première partie 41 est réservée à l'émission du premier signal $f_0 + \delta f_e + \Delta f$ selon la polarisation verticale V. La deuxième partie 42 est réservée à l'émission du deuxième signal $f_0 + \delta f_e - \Delta f$ selon la polarisation horizontale H. Cette solution permet d'utiliser toute la surface de l'antenne pour émettre chacun des deux signaux et donc d'obtenir un gain plus élevé.

On décrit maintenant la partie réception en commençant par la problématique de la mesure de la vitesse Doppler.

On considère une cible de vitesse Doppler $V$ (projection de son vecteur vitesse sur la bissectrice 10 de l'angle $\widehat{ECR}$ ).

- La porteuse à $f_0 + \delta f_e - \Delta f$ est reçue à $f_{rec1} = \left(\frac{c+V}{c-V}\right)(f_0 + \delta f_e - \Delta f)$ ,

- La porteuse à $f_0 + \delta f_e + \Delta f$ est reçue à $f_{rec2} = \left(\frac{c+V}{c-V}\right)(f_0 + \delta f_e + \Delta f)$ .

Etant donné que V est très inférieure à la vitesse de propagation c, on a

$$\frac{c+V}{c-V} \cong 1 + \frac{2V}{c}.$$

Pour s'affranchir de l'erreur de fréquence inconnue $\delta f_e$, il faut éliminer ce terme dans la mesure, par exemple en mesurant l'écart de fréquence :

$$f_{rec2} - f_{rec1} = 2\Delta f\left(\frac{c+V}{c-V}\right) \cong 2\Delta f(1 + \frac{2V}{c}).$$

Cette relation montre que l'on peut obtenir la vitesse Doppler $V$ à partir de la mesure des fréquences reçues $f_{rec2}$, $f_{rec1}$ au facteur $2\Delta f$ près, à très faible dérive en raison de la haute stabilité de la source 22. Plus particulièrement, la mesure de la vitesse $V$ est fonction du rapport ($f_{rec2} - f_{rec1}$)/ $2\Delta f$, l'écart $2\Delta f$ entre les deux porteuses à l'émission étant plus précis, plus stable, que la fréquence d'émission nominale $f_0$.

Pour mesurer les deux fréquences précédentes $f_{rec2}$, $f_{rec1}$ on peut, par exemple, compter le nombre de périodes de chacune durant un temps suffisamment long T. On a ainsi : $n_1 = Tf_{rec1}$ et $n_2 = Tf_{rec2}$ et par

conséquent $\Delta n = n_2 - n_1 = 2T\Delta f\left(\frac{c+V}{c-V}\right).$

Un problème est que l'intervalle de comptage de durée T est nécessairement élaboré à bord du radar récepteur avec une horloge disponible à bord. Cette horloge présente inévitablement une dérive par rapport à la valeur exacte. Soit F cette fréquence théorique et $F + \delta F$ sa fréquence effective. Si T est déterminé par Q périodes de cette fréquence, sa valeur effective est $T = \frac{Q}{F+\delta F} \cong T_0 - T_0\frac{\delta F}{F}$ où on a posé $T_0 = \frac{Q}{F}$ .

On mesure par conséquent :

$$\Delta n = 2\Delta f \left(\frac{c+V}{c-V}\right)\left(T_0 - T_O \frac{\delta F}{F}\right) \cong 2\Delta f T_0 \left(1 + \frac{2V}{c}\right)\left(1 - \frac{\delta F}{F}\right) \cong 2\Delta f T_0 \left(1 + \frac{2V}{c} - \frac{\delta F}{F}\right)$$

en négligeant le second ordre, on obtient la mesure de la vitesse Doppler en faisant intervenir $\Delta f$ selon l'équation suivante :

$$\frac{\Delta n}{2T_0\Delta f} \cong 1 + \frac{2V}{c} - \frac{\delta F}{F} \qquad (1)$$

Cette équation montre que l'erreur minimale sur $\frac{2V}{c}$ est au mieux l'erreur relative sur $F$, soit ( $\frac{\delta F}{F}$ ), ce qui signifie que la détermination de l'intervalle T ne peut être faite avec la source principale de faible stabilité à $f_0$ mais en utilisant une source auxiliaire plus stable, et de fréquence $F$ plus basse, comme celle utilisée à l'émission pour générer les deux tons.

En négligeant l'erreur sur la fréquence F, la vitesse V est obtenue selon l'équation suivante :

$$\frac{\Delta n}{2T_0\Delta f} \cong 1 + \frac{2V}{c} \qquad (2)$$

où $\frac{\Delta n}{T_0}$ donne la mesure de la différence des fréquences des deux porteuses reçues $f_{rec2}$, $f_{rec1}$ affectées de l'effet Doppler.

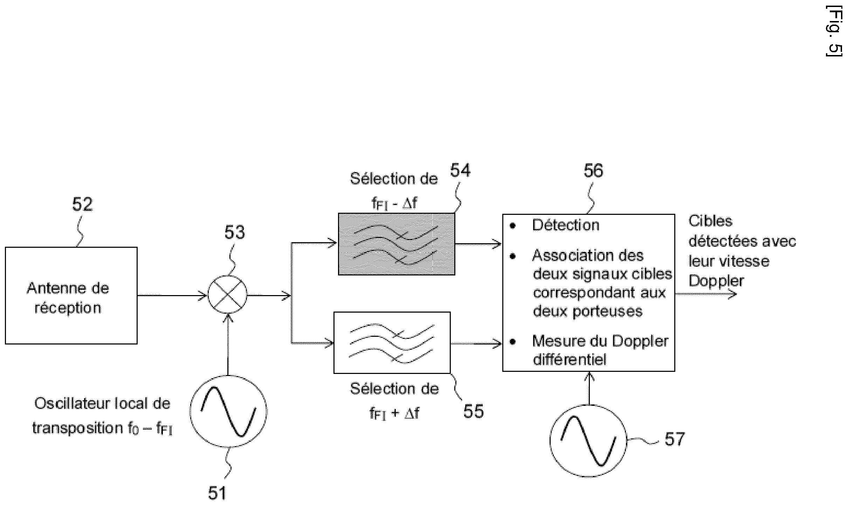

La figure 5 présente un exemple de synoptique d'un dispositif de réception selon l'invention permettant d'obtenir la vitesse Doppler $V$ en fonction de la mesure de la différence de ces deux fréquences reçues (porteuses du signal réfléchi par la cible) et de l'écart fréquentiel $\Delta f$.

Un mélangeur 53 reçoit sur une première entrée le signal de réception capté par l'antenne de réception 52 et reçoit sur une deuxième entrée un signal issu d'un oscillateur local 51 à la fréquence de transposition, voisine de la fréquence d'émission, égale $f_0$ - $f_{FI}$, le signal de sortie du mélangeur étant classiquement transposé à la fréquence intermédiaire $f_{FI}$ caractérisant une réception hétérodyne. Le signal de sortie du mélangeur est présenté en entrée de deux filtres passe-bande 54, 55.

Un premier filtre passe-bande 54 sélectionne la raie à la fréquence $f_{FI}$ - $\Delta f$, transposition de la porteuse reçue qui avait été émise à $f_0 + \delta f_e$ - $\Delta f$.

Un deuxième filtre passe-bande 55 sélectionne la raie à la fréquence $f_{FI} + \Delta f$, transposition de la porteuse reçue qui avait été émise $f_0 + \delta f_e + \Delta f$.

Des moyens de traitement exploitent les deux raies sélectionnées par les filtres passe-bande pour calculer la différence des porteuses reçues $f_{rec2}$ - $f_{rec1}$. A cet effet, on utilise une horloge 57, de haute précision, produisant un signal à une fréquence F, pour la transposition des deux raies en fréquence de base ($f_0$) ainsi que pour leur échantillonnage dans cette fréquence de base. Les moyens de traitement 56 calculent la vitesse Doppler conformément à l'équation (2). On obtient ainsi la vitesse Doppler des cibles détectées par l'antenne de réception 51.

La source 57 doit avoir un niveau de stabilité suffisant pour échantillonner les signaux issus des filtres 54, 55 avec précision et par conséquence pour calculer la différence des fréquences reçues avec précision. Sa fréquence F est basse, en tous cas plus faible que la fréquence de base.

Avantageusement, la transposition du signal reçu (récepteur hétérodyne 51, 53) ne fait pas appel à une source de haute stabilité. La source utilisée 51 peut avoir une fréquence variable, sans stabilité particulière, pour gérer l'agilité de fréquence.

L'échantillonnage en bande de base, nécessaire dans le traitement 56 pour retrouver l'écart de fréquence (donc la vitesse Doppler) utilise donc une horloge 57 de fréquence fixe, plutôt faible, mais de haute précision. Il n'y a pas nécessairement d'interaction entre les deux sources 51, 57.

Avantageusement, l'invention permet de s'affranchir de la dérive des oscillateurs locaux de chaque radar, s'affranchissant ainsi de la dérive de l'oscillateur local 21 générant les ondes hyperfréquence à l'émission et de la dérive de l'oscillateur local 51 générant les ondes hyperfréquence à la réception.

Des données doivent être transmises du radar émetteur vers le radar récepteur pour coordonner leurs fonctionnements, ces données sont notamment les suivantes :

- Coordonnées (*X, Y,Z*) du radar émetteur ;
- Vecteur vitesse (*Vx, Vy, Vz*) du radar émetteur ;
- Direction illuminée par le radar émetteur : par exemple deux cosinus directeurs (*Uy, Uz*) ;
- Indication permettant de connaître la fréquence centrale $f_0$ ;
- Indication éventuelle permettant de connaître l'écart entre porteuses $\Delta F$ ;
- Indications concernant la forme d'onde utilisée.

Ces échanges de données sont à bas débit moyen (quelques kbits/s en moyenne). On peut remarquer qu'il n'est pas forcément nécessaire qu'il y ait un retour d'information du radar récepteur vers le radar émetteur, ce qui favorise la discrétion du système.

## Revendications

1. Procédé de mesure de la vitesse Doppler d'une cible détectée par un dispositif radar multistatique comportant au moins un premier radar (E) générant un signal d'émission vers ladite cible (C) et un deuxième radar (R) recevant le signal rétrodiffusé par ladite cible, le deuxième radar ayant connaissance :

   - de coordonnées du premier radar,
   - d'un vecteur vitesse du premier radar,
   - d'une direction illuminée par le premier radar,
   - d'une fréquence centrale d'émission ($f_0$) utilisée par le premier radar,
   - d'une forme d'onde utilisée par le premier radar,

   dans lequel on génère (23, 24,25) à l'émission, deux ondes porteuses ayant un écart fréquentiel donné (2$\Delta f$), ledit écart fréquentiel étant connu du deuxième radar, le procédé de mesure de la vitesse Doppler d'une cible étant **caractérisé en ce que** la mesure de la vitesse Doppler en réception est fonction de la différence des fréquences de réception desdites ondes porteuses divisée par ledit écart fréquentiel (2$\Delta f$).

2. Procédé selon la revendication 1, dans lequel les deux ondes porteuses sont générées à l'émission par mélange (23) d'une onde de fréquence voisine de la fréquence d'émission (21) et d'une onde de plus basse fréquence (22) fixe et plus stable en fréquence que ladite fréquence d'émission.

3. Procédé selon l'une quelconque des revendications précédentes, dans lequel l'antenne d'émission dudit premier radar est délimitée en au moins deux parties (31, 32), une première partie (31) est dédiée à l'émission d'une onde porteuse et une deuxième partie (32) est dédiée à l'émission de l'autre onde porteuse.

4. Procédé selon l'une quelconque des revendications 1 ou 2, dans lequel une onde porteuse est émise selon une polarisation (41), l'autre onde porteuse étant émise sur une autre polarisation (42).

5. Procédé selon l'une quelconque des revendications précédentes, dans lequel à la réception, la transposition en fréquence des signaux de réception desdites ondes porteuses réfléchies par ladite cible (C) est réalisée en les mélangeant (53) avec une onde de fréquence voisine de ladite fréquence d'émission fournie par une première horloge (51).

6. Procédé selon la revendication 5, dans lequel ladite différence des fréquences de réception desdites porteuses réfléchies par ladite cible (C) est mesurée à la réception en utilisant une deuxième horloge (57) plus précise que ladite première horloge (51).

7. Procédé selon la revendication 6, dans lequel les deux horloges sont indépendantes.

## Patentansprüche

1. Verfahren zur Messung der Dopplergeschwindigkeit eines Ziels, das von einer multistatischen Radarvorrichtung erfasst wird, die mindestens ein erstes Radar (E), das ein Sendesignal in Richtung des Ziels (C) erzeugt, und ein zweites Radar (R), welches das von dem Ziel rückgestreute Signal empfängt, umfasst, wobei das zweite Radar Kenntnis hat:

- von Koordinaten des ersten Radars,
- von einem Geschwindigkeitsvektor des ersten Radars,
- von einer Richtung, die vom ersten Radar beleuchtet wird,
- von einer zentralen Sendefrequenz ($f_0$), die vom ersten Radar verwendet wird,
- von einer Wellenform, die vom ersten Radar verwendete wird,

wobei beim Senden zwei Trägerwellen mit einem gegebenen Frequenzabstand ($2\Delta f$) erzeugt werden (23, 24, 25), wobei der Frequenzabstand dem zweiten Radar bekannt ist, wobei das Verfahren zur Messung der Dopplergeschwindigkeit eines Ziels **dadurch gekennzeichnet ist, dass** die Messung der Dopplergeschwindigkeit im Empfang eine Funktion der Differenz der Empfangsfrequenzen der Trägerwellen ist, geteilt durch den Frequenzabstand ($2\Delta f$).

2. Verfahren nach Anspruch 1, wobei die beiden Trägerwellen beim Senden durch Mischen (23) einer Welle mit einer Frequenz nahe der Sendefrequenz (21) und einer Welle mit niedrigerer Frequenz (22) erzeugt werden, die fest und frequenzstabiler als die Sendefrequenz ist.

3. Verfahren nach einem der vorhergehenden Ansprüche, wobei die Sendeantenne des ersten Radars in mindestens zwei Teile (31, 32) abgegrenzt ist, wobei ein erster Teil (31) für die Aussendung einer Trägerwelle und ein zweiter Teil (32) für die Aussendung der anderen Trägerwelle bestimmt ist.

4. Verfahren nach einem der Ansprüche 1 oder 2, wobei eine Trägerwelle gemäß einer Polarisation (41) gesendet wird, wobei die andere Trägerwelle gemäß einer anderen Polarisation (42) gesendet wird.

5. Verfahren nach einem der vorhergehenden Ansprüche, wobei beim Empfang die Frequenzumsetzung der Empfangssignale der von dem Ziel (C) reflektierten Trägerwellen durchgeführt wird, indem sie mit einer Welle mit einer der Sendefrequenz benachbarten Frequenz, die von einem ersten Taktgeber (51) geliefert wird, gemischt werden (53).

6. Verfahren nach Anspruch 5, wobei die Differenz der Empfangsfrequenzen der von dem Ziel (C) reflektierten Trägerwellen beim Empfang unter Verwendung eines zweiten Taktgebers (57) gemessen wird, der genauer ist als der erste Taktgeber (51).

7. Verfahren nach Anspruch 6, wobei die beiden Taktgeber unabhängig sind.

**Claims**

1. A method for measuring the Doppler velocity of a target detected by a multistatic radar device comprising at least one first radar (E) generating a transmission signal towards said target (C) and a second radar (R) receiving the signal backscattered by said target, with the second radar knowing:

- the coordinates of the first radar;
- a velocity vector of the first radar;
- a direction illuminated by the first radar;
- a central transmission frequency ($f_0$) used by the first radar;
- a waveform used by the first radar;

wherein two carrier waves with a given frequency deviation ($2\Delta f$) are generated (23, 24, 25) on transmission, with the second radar knowing said frequency deviation, the method for measuring the Doppler velocity of a target being **characterised in that** measuring the Doppler velocity on reception is a function of the difference in the reception frequencies of said carrier waves divided by said frequency deviation ($2\Delta f$).

2. The method according to claim 1, wherein the two carrier waves are generated on transmission by mixing (23) a wave whose frequency is close to the transmission frequency (21) and a wave (22) with a lower frequency that is fixed and is more frequency stable than said transmission frequency.

3. The method according to any one of the preceding claims, wherein the transmission antenna of said first radar is divided into at least two parts (31, 32), a first part (31) is intended for transmitting a carrier wave and a second part (32) is intended for transmitting the other carrier wave.

4. The method according to any one of claims 1 or 2, wherein a carrier wave is transmitted with a polarisation (41), with the other carrier wave being transmitted with another polarisation (42).

5. The method according to any one of the preceding claims, wherein, on reception, the frequency transposition of the reception signals of said carrier waves reflected by said target (C) is carried out by mixing (53) them with a wave whose frequency is close to said transmission frequency supplied by a first clock (51).

6. The method according to claim 5, wherein said difference in the reception frequencies of said carrier waves reflected by said target (C) is measured on reception using a second clock (57) that is more accurate than said first clock (51).

7. The method according to claim 6, wherein the two clocks are independent.

[Fig. 1]

[Fig. 2]

[Fig. 3]

$f_0 + \delta f_e - \Delta f$ →

32

$f_0 + \delta f_e + \Delta f$ →

31

[Fig. 4]

$f_0 + \delta f_e + \Delta f$    Polarisation V

41

42

42

$f_0 + \delta f_e - \Delta f$ →

Polarisation H

41

[Fig. 5]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20160282457 A1
- EP 2461166 A1
- US 5534868 A
- FR 2879303 A1